# EUROPEAN PATENT SPECIFICATION

(11) **EP 1 976 393 B1**
(45) Date of publication and mention of the grant of the patent: **25.01.2012**
(21) Application number: 06764459.1
(22) Date of filing: 29.06.2006
(51) Int. Cl.: A23L 1/10, C08B 37/00, A23C 9/152, A23L 1/105, A23L 1/29, A23L 1/308

(54) **FOOD SUSPENSION COMPRISING BETA-GLUCAN AND A METHOD OF PREPARING THE SAME**
NAHRUNGSMITTELSUSPENSION, DIE BETA-GLUCAN ENTHÄLT, UND VERFAHREN ZU IHRER HERSTELLUNG
SUSPENSION ALIMENTAIRE COMPRENANT DU BÊTA-GLUCANE ET SON PROCÉDÉ DE PRÉPARATION

(30) Priority: 04.07.2005 FI 20050715
(43) Date of publication of application: 08.10.2008
(73) Proprietor: Velle RW Ltd., 3608 Limassol (CY)
(72) Inventor: SALOVAARA, Hannu, FI-00780 Helsinki (FI)
(74) Representative: Rogers, Alex Lee
(86) International application number: PCT/FI2006/000233
(87) International publication number: WO 2007/003688

(56) References cited:
- WO-A1-00/30457
- WO-A1-99/37171
- WO-A1-03/014165
- WO-A2-02/065855
- US-A- 4 814 172
- US-A- 5 686 123
- US-A- 5 686 123
- US-A1- 2002 192 770
- US-A1- 2003 068 357
- US-A1- 2003 165 604
- US-A1- 2004 219 261
- US-A1- 2004 258 829
- US-B1- 6 323 338
- BRENNAN C S ET AL: "The potential use of cereal (1->3,1->4)-beta-d-glucans as functional food ingredients" JOURNAL OF CEREAL SCIENCE, ACADEMIC PRESS LTD, XX, vol. 42, no. 1, 1 July 2005 (2005-07-01), pages 1-13, XP004896720 ISSN: 0733-5210
- J.JASKARI, K.HENRIKSSON, A.NIEMINEN, T.SUORTTI, H.SALOVAARA AND K.POUTANEN: "Effect of hydrothermal and enzymic treatments on the viscous behaviour of dry-and wet-milled oat brans" CEREAL CHEMISTRY, vol. 72, no. 6, 1995, pages 625-631, XP002515412
- ANTTILA H. ET AL.: 'Viscosity of beta-glucan in oat products' AGRICULTURAL AND FOOD SCIENCE vol. 13, 2004, pages 80 - 87, XP003003213

## Description

The invention relates to a food suspension defined in the preamble of claim 1, to a method defined in the preamble of claim 11, and to uses defined in claims 20 and 21.

### PRIOR ART

Cereal products, especially oat, are known to have properties affecting health. As for the use of oat, beta-glucan, which is a soluble dietary fiber, is known to lower cholesterol and keep blood sugar levels stable. The cholesterol-lowering ability is believed to be due to the ability of beta-glucan to form a viscous layer on the surface of the small intestine, said layer adsorbing, restraining or inhibiting the reabsorption of cholesterol in the small intestine, in consequence of which cholesterol is removed from the body. Beta-glucan also slows down, for example, the degradation of starch and the absorption of glucose thus lowering the values of the glygemic index (GI) and prolonging the satity.

Oat has been accepted, for example, by the US Food and Drug Administration (FDA) as a functional foodstuff. Products of oatmeal and oat bran can be marketed using the claim "may reduce the risk of heart disease." A requirement is that one portion contains at least 0.75 g of beta-glucan. Also some European countries allow the use of health claims associated with oat products in marketing. Physiologically favorable effects may be due to the ability of beta-glucan to add the viscosity of the intestinal content.

Previously, various cereal-based dairy or yoghurt-type foodstuffs in spoonable or drinkable versions are known.

However, a problem with the preparation of cereal-based product suspensions with a high beta-glucan concentration has been that beta-glucan easily degrades during the preparation of the product suspension, or because of the ingredients used in the preparation. For example, the ingredients used for preparation may contain beta-glucanase that cleaves beta-glucan. As a result of cleavage, beta-glucan loses its viscosity and thus its properties inhibiting the reabsorption of cholesterol and/or restraining the absorption of sugar. Adding various other enzymes during the preparation process of the product suspension may also result in the loss of the viscosity of beta-glucan.

A problem with previously known cereal-based product suspensions has been increasing the beta-glucan content of a serving while at the same time achieving a pleasant texture and maintaining the stability of the product suspension. Problems have occurred especially when attempting to increase the beta-glucan content, for example, to levels justifying the use of a health claim. In other words, cereal-based product suspensions have been non-stabile, easily sedimenting and wheying-off, meaning that the product is unpalatable to a consumer. Furthermore, a problem, for example, with cereal-based product suspensions in a spoonable form has been their disagreeable, stretchy, and slimy texture, especially when there has been an attempt to increase the beta-glucan content of the product suspension.

In other words, there has not been on the market a cereal-based product suspension that would fulfill the requirement set by authorities for presenting a health claim in conjunction with a product.

In other words, according to the prior art, it has not been possible to prepare stabile cereal-based food product suspensions with a high beta-glucan concentration that after packaging and storage are agreeable to savor (eat or drink).

It is an objective of the present invention to eliminate the aforementioned disadvantages.

One specific objective of the present invention is to disclose a novel, stabile cereal-based food suspension with a high beta-glucan concentration that can be packaged into suitable dose packages and eaten without further processing steps. One further objective of the invention is to disclose a novel method for forming said food suspension, as well as use of said food suspension.

US2004/0219261 relates to a fermented product based on an oat suspension.

US 5,686,123 relates to a homogenous and stable cereal suspension and a method of making the same.

WO 03/014165 relates to extraction of beta-glucan from cereals.

US 4,814,172 relates to a liquid bran drink.

US 2004/0258829 relates to dietary fibre containing materials comprising low molecular weight glucan.

Agricultural and Food Science, vol. 13, (2004): 80-87 is a review article entitled *Viscosity of beta-glucan in oat products.*

WO 99/37171 relates to a method for producing a soft drink.

### SUMMARY OF THE INVENTION

The food suspension, the method and the use in accordance with the invention are characterized by what has been presented in the claims.

The invention is based on research work done, during which it was surprisingly found out that it is possible to achieve a stabile, cereal-based food suspension with a beta-glucan content (β-glucan, a soluble dietary fiber) of at least 0.25 g/100 g of food suspension, more preferably at least 0.3 g/100 g of food suspension, and most preferably at least 0.5 g/100 g of food suspension. In particular, it was found out that by cooling the heat-treated suspension, formed by cereal material and water, prior to grinding, it is possible to achieve a stabile food suspension with a high beta-glucan concentration and an agreeable, stabile texture. Further, when prepared in a manner described above, beta-glucan maintains its preferable properties and does not, for example, cleave and/or lose its viscosity forming capability during the preparation process.

A cereal-based food suspension is used to mean a food suspension in the preparation of which, for example, cereal material has been used. In addition to cereal, in the preparation of the food suspension, one may have used any other ingredients suitable for a food suspension.

The food suspension with a high beta-glucan concentration, according to the invention, has been prepared as defined in claim 1.

When preparing in a manner such as this, one achieves a stabile cereal-based food suspension having a beta-glucan concentration of at least 0.25 g/100 g of food suspension. The beta-glucan concentration of the food suspension can be, for example, at least 0.3 g/100 g of food suspension, preferably at least 0.5 g/100 g of food suspension. Preferably, the beta-glucan concentration of the food suspension is at least 0.75 g/dose of food suspension, in which case the desired beta-glucan concentration for a specific dose size shall be taken into account when preparing the food suspension.

Cereal material is used to mean, for example, oat, barley, wheat, rye, rice, corn, millet or any combination of these. The cereal material is in the form of cereal bran, cereal flour, cereal flake, wholegrain, cereal fiber concentrate, or in the form of a combination of two or more of these components.

Preferably, the cereal material comprises cereal bran. The cereal bran can comprise, for example, oat bran.

In addition, it is possible to add to the cereal material, for example, psyllium fiber and/or any other fiber suitable for the preparation of a stabile food suspension.

The beta-glucan concentration of the cereal material can be 1 - 60 w-%, preferably 7 - 25 w-% and most preferably 9 - 16 w-%. In the preparation of the food suspension in accordance with the present invention it is possible to use mixtures of cereal materials possessing different beta-glucan concentrations as the cereal material.

The beta-glucan of the food suspension is substantially soluble. In addition, the beta-glucan of the food suspension is native and substantially non-degraded. Thus, the beta-glucan has not degraded in any substantial manner during the preparation process. In that case, the beta-glucan is capable of increasing the viscosity even in the concentration range 0.1 - 1.0% as the concentration increases. As beta-glucan degrades, its viscosity forming capability drastically decreases. The best properties for beta-glucan in a food suspension are achieved when it is hydrated, but enzymatically and mechanically protected from degradation.

Further, the molecular weight of beta-glucan is 100000 - 2000000 Da, preferably at least about 400000 Da.

The viscosity of the food suspension in accordance with the invention can be 100 - 2000000 cP at a temperature of 25°C (Brookfield, rotation speed 12 rpm, spindle No. 3 or 4). The food suspension can be in a drinkable, spoonable or spreadable form. The viscosity of a food suspension in a drinkable form can be e.g. 200 - 2000 cP (spindle No. 3), and the viscosity of a food suspension in a spoonable or spreadable form can be 20000 - 2000000 cP, e.g. 20000 - 200000 cP (spindle No. 4).

Further, one may have added to the food suspension in accordance with the present invention one or more flavors, sugars, salts, spices, organic acids, flavoring agents, colorants, auxiliary substances, additives, preservatives, acidity regulators, living micro-organisms, enzymes, berries, fruits and/or vegetables and/or jams, purees and/or juices made of them, and/or any other conventional substance suitable for a food suspension. The food suspension may further include biocomponents such as tocopherols or sterols that come together with the original material.

The stabile cereal-based food suspension in accordance with the invention is prepared using a method as defined in claim 11.

The method of the present invention achieves a stabile cereal-based food suspension having a beta-glucan concentration of at least 0.25 g/100 g of food suspension.

The weight ratio of the cereal material and water, used as the original materials, at step a) can be e.g. 2:1 - 1:100, preferably 1:1 - 1:50. When desired, it is possible to add to the cereal material psyllium fiber and/or any other fiber suitable for the preparation of a stabile food suspension.

When desired, the cereal material can be separately pulverized prior to treatment with heat. It can be e.g. ground to achieve a sufficiently fine original material. Depending on the cereal material used, it can also be treated with any conventional preliminary treatment method prior to the heat-treatment step of cereal material and water.

The mixture of cereal material and water can be heat-treated e.g. by heating, cooking and/or treating the mixture in any other similar manner. The mixture of cereal material and water can be heat-treated at step a) e.g. at a temperature of 75 - 140°C e.g. for 0.5 - 60 minutes. Preferably, the mixture of cereal material and water can be heat-treated e.g. at a temperature of 90 - 100°C. When determining the time consumed by treatment with heat, one shall take into account the temperature to be used. When desired, the mixture of cereal material and water can be stirred simultaneously with the heat-treatment to form a stabile suspension.

During the heat-treatment, the starch contained in the cereal material gelatinizes; the protein denaturates; and the enzymes inactivate. The heat-treatment also destroys the micro-organisms or their enzymes possibly present in original materials and contaminating or causing deterioration of foodstuffs. When desired, in addition to treatment with heat, the suspension to be prepared can be sterilized during the preparation thereof by means of any conventional method per se, for example, by a UHT treatment.

After the treatment with heat, the suspension formed by cereal material and water is cooled. The suspension can be cooled e.g. by leaving the suspension at room temperature; by placing it in a cold room and/or in a cooling container; and/or a heat exchanger can be used for cooling. The suspension is allowed to cool to a temperature of 0 - 50°C. Preferably, the heat-treated suspension is cooled to a temperature of 0 - 40°C. More preferably, the heat-treated suspension is cooled to a temperature of 0 - 25°C. Most preferably, the heat-treated suspension is cooled to a temperature of 0 - 15°C. The suspension can be cooled e.g. to room temperature or below.

After the cooling, the suspension is ground so that a stabile, uniform food suspension is achieved. For grinding, any conventional device suitable for mechanical treatment of a suspension can be used, such as an effective mixer, a colloid mill, a homogenizer, a disintegrator, or any other similar device.

During the preparation of a food suspension in accordance with the present invention it is possible to further add to the suspension one or more flavors, sugars, salts, spices, organic acids, flavoring agents, colorants, auxiliary substances, additives, preservatives, acidity regulators, living micro- organisms, enzymes, berries, fruits and/or vegetables and/or jams, purees and/or juices made of them, and/or any other substance suitable for a food suspension. Said substances can be added during any preparation step of the food suspension in accordance with the present invention. Preferably, said substances are added during grinding of the suspension and/or after the grinding.

When adding the substances mentioned above and, specifically, jams, purees and/or juices to the suspension, one shall take into account the effect of the mixing speed on the properties of the food suspension. For example, when preparing a food suspension in a drinkable form, from a stability standpoint of the food suspension, it is preferable to add, for example, the jam to the suspension at a gentle speed using a low mixing intensity/speed. Similarly, when preparing a food suspension in a spoonable form, the jam shall be added to the suspension by powerfully mixing (at a great mixing intensity/speed), enabling one to achieve a stabile suspension to be eaten using a spoon that does not have the stretchy (sour whole milk-like, Finnish "viili"-like) texture which is experienced unpalatable.

Further, the method can comprise a step at which the suspension is fermented with micro-organisms. For the fermentation of the suspension it is possible to use e.g. bacteria such as lactic acid bacteria, bifidobacteria, propionic acid bacteria and/or any other bacteria and/or mixtures thereof suitable for the fermentation of a food suspension. For the fermentation it is also possible to use any other suitable micro-organisms such as yeast. Yeast can produce e.g. aroma; it can have a probiotic effect; and/or it can have any other effect suitable for a food suspension. Said yeast shall, however, be such, with respect to its properties, that it grows poorly, or not at all, at a temperature of below 15°C, e.g. 10°C. In this manner, the detrimental effect of gas formation during the storage of the food suspension is prevented. The suspension can be fermented e.g. after the treatment with heat prior to grinding and/or after the grinding. The fermentation step can be implemented in conditions known per se and suitable for each micro-organism. The micro-organisms to be added to the food suspension shall not have the enzyme activity detrimentally affecting the texture of the food suspension.

As an alternative to the fermentation or in addition thereto, it is possible to add to the food suspension an inoculum of micro-organisms such as bacteria and/or yeasts. As an alternative to the fermentation or in addition thereto, it is possible to add to the food suspension acidity regulators such as citric acid and/or other acids and/or auxiliary substances to be used as food additives.

The food suspension of the present invention can be portioned into suitable dose packages and stored at cool temperature. According to the present invention, one achieves a product to be eaten cold such as a handy ready-to-eat snack or dessert. Alternatively, the food suspension in accordance with the present invention can be used for the preparation of other foodstuffs.

Further, the present invention relates to said food suspension for use in lowering cholesterol and/or GI values and/or improving the function of stomach.

The present invention further relates to the use of said food suspension for improving and/or modifying the flavor, texture and/or nutritional value of a soy- and/or dietary-based product composition, which is a yoghurt.

Compared to prior-art cereal-based product suspensions, the food suspension in accordance with the invention has the advantage that according to the present invention one achieves a cereal-based food suspension with a high beta-glucan concentration, but still with a stabile, uniform and agreeable texture. In other words, the food suspension in accordance with the present invention solves the problems of prior-art cereal-based product suspensions associated with the non-stability of the product such as wheying-off and sedimentation, and disagreeable stretchability, especially when there is a wish to increase the beta-glucan concentration of a food product.

In other words, an advantage of the food suspension in accordance with the invention is its stabile texture. The food suspension in accordance with the present invention will last several weeks without wheying-off when stored at a temperature of + 5°C.

Further, an advantage of the food suspension is its agreeable texture. For example, a food suspension in a spoonable form has a discontinuous, and not a stretchy ("viili"-like), texture.

Further, an advantage of the food suspension in accordance with the invention is the health effects associated with its high beta-glucan concentration that can be mentioned e.g. in the marketing of a product.

### DETAILED DESCRIPTION OF THE INVENTION

### Example 1

For preparing a food suspension to be eaten with a spoon, a mixture of water (15 l) and oat bran (1.2 kg, with a beta-glucan concentration of at least 14%) was cooked at a temperature of 95 - 98°C for 15 to 20 minutes, during which time the starch contained in the oat bran gelatinized; the protein denaturated; and the solubility of the dietary fiber increased. The suspension formed as a consequence of cooking was allowed to cool thereafter to room temperature, after which the suspension was ground by letting it through a colloid mill (Stephan Microcut MC 15, Hameln, Germany).

Sugar, jam or other conventional flavorings and aroma were added to the ground suspension while at the same time mixing with a bar blender (Philips HR1340). The citric acid present in the added substances decreased the pH to about 4.

Finally, the suspension was packaged into plastic beakers of 150 g and stored at +5 °C, at which the suspension lasted over 6 weeks without wheying-off.

The spoonable food suspension in accordance with Example 1 had the following properties: the viscosity was about 25000 cP (Brookfield, rotation speed 12 rpm, spindle No. 4, 10°C), the consistency, when measured using a Bostwick device (10°C), was about 1 to 2 cm/20 s, the beta-glucan concentration was over 1.125g/150g of food suspension (0.75g/100g), the molecular weight of beta-glucan was over 400000 Da and it had a capability of powerfully increasing the viscosity as its concentration increased; the texture was agreeable and did not show the so-called "viili"-like stretchability.

### Example 2

For preparing a drinkable food suspension, a mixture of water (15 l) and oat bran (0.45 kg, with a beta-glucan concentration of over 14%) was cooked at a temperature of 95 - 98°C for 15 to 20 minutes. The formed heat-treated suspension was cooled to a temperature of about 8°C, after which it was ground using a mechanical mixer.

Sugar, jam or other flavorings and aroma were added to the ground suspension while at the same time mixing (using a blender (Braun MultiMix M700) at the lowest mixing speed), and the pH thereof decreased to about 4.5 due to the acidity regulation. The suspension was stored at +5°C, at which it lasted over 6 weeks without wheying-off and sedimentation.

The drinkable food suspension in accordance with Example 2 had the following properties: the viscosity was about 1000 cP (Brookfield, rotation speed 12 rpm, spindle No. 3, 10°C); the consistency, measured by a Bostwick device (10°C), was over 20 cm/10 s; the beta-glucan concentration was 0.8 g/200 g of food suspension (0.4 g/100 g); the molecular weight of beta-glucan was over 400000 Da and it had an ability to powerfully increase the viscosity as its concentration increased; the texture was agreeable and did not feel sandy in the mouth.

### Example 3

For the preparation of food suspensions fermented with bacteria, the same steps were taken as in Examples 1 and 2, but with the difference that the suspensions were fermented with lactic acid bacteria or bifidobacteria or mixtures containing these after the grinding prior to addition of other substances such as jam. To accelerate the fermentation, some sugar was added to the suspension. The suspension was fermented at +37°C for about 8 hours, in consequence of which the pH decreased below 4.3, and the cell densities of bacteria exceeded 10⁷ CFU/g. Using acidity regulators was not necessary.

The properties of the food suspension were as presented in Example 1 or 2.

Instead of the fermentation of the suspension, prior to packaging of the food suspension, it is possible to directly add an inoculum containing for example bacteria to the food suspensions prepared according to Example 1 or 2.

### Example 4

For preparing a salty food suspension, a suspension was formed applying the procedures described in Example 1 or 2. During the grinding, salt, monosodium glutamate and other spices were added to the suspension. Thereafter, the food suspension was packaged into the dose packages and stored at a temperature of +5°C.

### example 5

For preparing a so-called yoghurt extender, a food suspension was formed applying some of the procedures described in Examples 1 to 4. Thereafter, the food suspension thus formed was used to improve or modify the taste, texture and nutritional value of soy- or dietary-based yoghurt.

## Claims

1. A stabile cereal-based food suspension, **characterized in that** the food suspension has been prepared
a) by heat-treating a mixture consisting of beta-glucan-rich cereal material and water to gelatinize the starch contained in the cereal material to form a suspension;
b) by cooling the heat-treated suspension; and
c) by grinding the cooled suspension to form a stabile food suspension; and **in that** the beta-glucan concentration of the food suspension is at least 0.25 g/100 g of food suspension, wherein the suspension is cooled at step b) to a temperature of 0 to 50 °C,
wherein the cereal material is in the form of cereal bran, cereal flour, cereal flake, wholegrain, cereal fiber concentrate, or in the form of a combination of two or more of these components, and the beta-glucan is native and substantially non-degraded.

2. The food suspension as defined in claim 1, **characterized in that** the beta-glucan concentration of the food suspension is at least 0.3 g/100 g of food suspension.

3. The food suspension as defined in any one of claims 1 - 2, **characterized in that** the cereal material comprises oat, barley, wheat, rye, rice, corn, millet or any combination of these.

4. The food suspension as defined in any one of claims 1 - 3, **characterized in that** the beta-glucan concentration of the cereal material is 1 - 60 w-%.

5. The food suspension as defined in any one of claims 1 to 4, **characterized in that** beta-glucan concentration of the food suspension is at least 0.5 g/100 g of food suspension.

6. The food suspension as defined in any one of claims 1 - 5, **characterized in that** the molecular weight of beta-glucan is 100000 - 2000000 Da.

7. The food suspension of claim 6, **characterized in that** the molecular weight of the beta glucan is at least 400000 Da.

8. The food suspension as defined in any one of claims 1 - 7, **characterized in that** the viscosity of the food suspension is 100 - 2000000 cP at a temperature of 25°C.

9. The food suspension as defined in any one of claims 1 - 8, **characterized in that** the food suspension is in a drinkable, spoonable or spreadable form.

10. The food suspension as defined in any one of claims 1 - 9, **characterized in that**, furthermore, one has added thereto during grinding of the suspension and/or after the grinding one or more flavors, sugars, salts, spices, organic acids, flavoring agents, colorants, auxiliary substances, additives, preservatives, acidity regulators, living microorganisms, enzymes, berries, fruits and/or vegetables and/or jams, purees and/or juices made of them.

11. A method for preparing a stabile cereal- based food suspension as defined in any one of claims 1 - 10, **characterized in that** the method comprises the steps of:
a) heat-treating a mixture consisting of beta-glucan-rich cereal material and water to gelatinize the starch of the cereal material to form a suspension;
b) cooling the heat-treated suspension; and
c) grinding the cooled suspension to form a stabile food suspension, wherein the suspension is cooled at step b) to a temperature of 0 to 50°C,
wherein the beta-glucan concentration of the food suspension is at least 0.25 g/100 g of food suspension, the cereal material is in the form of cereal bran, cereal flour, cereal flake, wholegrain, cereal fiber concentrate, or in the form of a combination of two or more of these components, and the beta-glucan is native and substantially non-degraded.

12. The method as defined in claim 11, **characterized in that** the weight ratio of the cereal material and water at step a) is 2:1 - 1: 100.

13. The method as defined in any one of claims 11 - 12, **characterized in that** at step a) heat-treating is at a temperature of 75 - 140 °C for 0.5 - 60 minutes.

14. The method as defined in any one of claims 11 - 13, **characterized in that** the mixture of cereal material and water is stirred during the heat-treatment to form a uniform suspension.

15. The method as defined in any one of claims 11 - 14, **characterized in that** the heat-treated suspension is cooled at step b) to a temperature of 0 - 25°C.

16. The method as defined in any one of claims 11 - 15, **characterized in that** furthermore, during the preparation of the food suspension during grinding of the suspension and/or after the grinding, one adds thereto one or more flavors, sugars, salts, spices, organic acids, flavoring agents, colorants, auxiliary substances, additives, preservatives, acidity regulators, living micro-organisms, enzymes, berries, fruits and/or vegetables and/or jams, purees and/or juices made of them.

17. The method as defined in claim 16, **characterized in that** one adds to a food suspension in a drinkable form, by mixing at a gentle speed, one or more flavors, sugars, salts, spices, organic acids, flavoring agents, colorants, auxiliary substances, additives, preservatives, acidity regulators, living micro-organisms, enzymes, berries, fruits and/or vegetables and/or jams, purees and/or juices made of them.

18. The method as defined in claim 16, **characterized in that** one adds to a food suspension in a spoonable form, by powerfully mixing, one or more flavors, sugars, salts, spices, organic acids, flavoring agents, colorants, auxiliary substances, additives, preservatives, acidity regulators, living micro-organisms, enzymes, berries, fruits and/or vegetables and/or jams, purees and/or juices made of them.

19. The method as defined in any one of claims 11 - 18, **characterized in that** the method further comprises a step at which the suspension is fermented with micro-organisms.

20. The food suspension as defined in any one of claims 1 - 10 for use in lowering cholesterol and/or GI levels and/or improving function of stomach.

21. The use of a food suspension as defined in any one of claims 1 - 10 for improving and/or modifying the flavor, texture and/or nutritional value of a soy- and/or dietary-based product composition, which is a yoghurt.

## Patentansprüche

1. Stabile Nahrungsmittelsuspension auf Getreidebasis, **dadurch gekennzeichnet, dass** die Nahrungsmittelsuspension hergestellt worden ist
a) durch Wärmebehandlung eines Gemischs, bestehend aus einem Beta-Glucan-reichen Getreidematerial und Wasser zum Gelieren der im Getreidematerial vorhandenen Stärke, um eine Suspension zu bilden;
b) durch Abkühlen der wärmebehandelten Suspension; und
c) durch Zermahlen der abgekühlten Suspension, um eine stabile Nahrungsmittelsuspension zu bilden; und dadurch, dass die Beta-Glucan-Konzentration in der Nahrungsmittelsuspension mindestens 0,25 g/100 g Nahrungsmittelsuspension ist, wobei die Suspension in Schritt b) auf eine Temperatur von 0 bis 50°C abgekühlt wird,
wobei das Getreidematerial in der Form von Getreidekleie, Getreidemehl, Getreideflocken, Vollkorn, Getreidefaserkonzentrat, oder in der Form einer Kombination von zwei oder mehreren dieser Bestandteile vorliegt, und das Beat-Glucan nativ und im Wesentlichen nicht degradiert ist.

2. Nahrungsmittelsuspension gemäß Anspruch 1, **dadurch gekennzeichnet, dass** die Beta-Glucan-Konzentration der Nahrungsmittelsuspension mindestens 0,3 g/100 g Nahrungsmittelsuspension ist.

3. Nahrungsmittelsuspension gemäß irgendeinem der Ansprüche 1 bis 2, **dadurch gekennzeichnet, dass** das Getreidematerial Hafer, Gerste, Weizen, Roggen, Reis, Mais, Hirse oder irgendeine Kombination daraus umfasst.

4. Nahrungsmittelsuspension gemäß irgendeinem der Ansprüche 1 bis 3, **dadurch gekennzeichnet, dass** die Beta-Glucan-Konzentration des Getreidematerials von 1 bis 60 Gew.-% ist.

5. Nahrungsmittelsuspension gemäß irgendeinem der Ansprüche 1 bis 4, **dadurch gekennzeichnet, dass** die Beta-Glucan-Konzentration der Nahrungsmittelsuspension mindestens 0,5 g/100 g Nahrungsmittelsuspension ist.

6. Nahrungsmittelsuspension gemäß irgendeinem der Ansprüche 1 bis 5, **dadurch gekennzeichnet, dass** das Molekulargewicht des Beta-Glucans 100000 bis 2000000 Da ist.

7. Nahrungsmittelsuspension gemäß Anspruch 6, **dadurch gekennzeichnet, dass** das Molekulargewicht des Beta-Glucans mindestens 400000 Da ist.

8. Nahrungsmittelsuspension gemäß irgendeinem der Ansprüche 1 bis 7, **dadurch gekennzeichnet, dass** die Viskosität der Nahrungsmittelsuspension 100 bis 2000000 cP bei einer Temperatur von 25°C ist.

9. Nahrungsmittelsuspension gemäß irgendeinem der Ansprüche 1 bis 8, **dadurch gekennzeichnet, dass** die Nahrungsmittelsuspension in einer trinkbaren, löffelbaren oder streichbaren Form ist.

10. Nahrungsmittelsuspension gemäß irgendeinem der Ansprüche 1 bis 9, **dadurch gekennzeichnet, dass** man zudem während des Zermahlens der Suspension und/oder nach dem Zermahlen dazu zugefügt hat ein oder mehrere Aromen, Zucker, Salze, Gewürze, organische Säuren, Geschmacksverstärker, Farbstoffe, Hilfsstoffe, Zusätze, Konservierungsmittel, Säureregulatoren, lebende Mikroorganismen, Enzyme, Beeren, Früchte und/oder Gemüse und/oder daraus hergestellte Marmeladen, Pürees und/oder Säfte.

11. Herstellungsverfahren für eine stabile Nahrungsmittelsuspension auf Getreidebasis aus irgendeinem der Ansprüche 1 bis 10, **dadurch gekennzeichnet, dass** das Verfahren die Schritte umfasst:
a) Wärmebehandeln eines Gemischs, bestehend aus einem Beta-Glucan-reichen Getreidematerial und Wasser zum Gelieren der im Getreidematerial vorhandenen Stärke, um eine Suspension zu bilden;
b) Abkühlen der wärmebehandelten Suspension; und
c) Zermahlen der abgekühlten Suspension, um eine stabile Nahrungsmittelsuspension zu bilden, wobei die Suspension in Schritt b) auf eine Temperatur von 0 bis 50°C abgekühlt wird,
wobei die Beta-Glucan-Konzentration in der Nahrungsmittelsuspension mindestens 0,25 g/100 g Nahrungsmittelsuspension ist, das Getreidematerial in der Form von Getreidekleie, Getreidemehl, Getreideflocken, Vollkorn, Getreidefaserkonzentrat, oder in der Form einer Kombination von zwei oder mehreren dieser Bestandteile vorliegt, und das Beat-Glucan nativ und im Wesentlichen nicht degradiert ist.

12. Herstellungsverfahren gemäß Anspruch 11, **dadurch gekennzeichnet, dass** das Gewichtsverhältnis von Getreidematerial und Wasser im Schritt a) 2:1 bis 1:100 ist.

13. Herstellungsverfahren gemäß irgendeinem der Ansprüche 11 bis 12, **dadurch gekennzeichnet, dass** in Schritt a) die Wärmebehandlung bei einer Temperatur von 75 bis 140°C während 0,5 bis 60 Minuten ist.

14. Herstellungsverfahren gemäß irgendeinem der Ansprüche 11 bis 13, **dadurch gekennzeichnet, dass** das Gemisch von Getreidematerial und Wasser während der Wärmebehandlung gerührt wird, um einer gleichmäßige Suspension zu bilden.

15. Herstellungsverfahren gemäß irgendeinem der Ansprüche 11 bis 14, **dadurch gekennzeichnet, dass** die wärmebehandelte Suspension in Schritt b) auf eine Temperatur von 0 bis 25°C abgekühlt wird.

16. Herstellungsverfahren gemäß irgendeinem der Ansprüche 11 bis 15, **dadurch gekennzeichnet, dass** man zudem während der Herstellung der Nahrungsmittelsuspension während des Zermahlens der Suspension und/oder nach dem Zermahlen dazu zugefügt hat ein oder mehrere Aromen, Zucker, Salze, Gewürze, organische Säuren, Geschmacksverstärker, Farbstoffe, Hilfsstoffe, Zusätze, Konservierungsmittel, Säureregulatoren, lebende Mikroorganismen, Enzyme, Beeren, Früchte und/oder Gemüse und/oder daraus hergestellte Marmeladen, Pürees und/oder Säfte.

17. Herstellungsverfahren gemäß Anspruch 16, **dadurch gekennzeichnet, dass** man zu einer Nahrungsmittelsuspension in einer trinkbaren Form zufügt, durch Mischen mit schonender Geschwindigkeit, ein oder mehrere Aromen, Zucker, Salze, Gewürze, organische Säuren, Geschmacksverstärker, Farbstoffe, Hilfsstoffe, Zusätze, Konservierungsmittel, Säureregulatoren, lebende Mikroorganismen, Enzyme, Beeren, Früchte und/oder Gemüse und/oder daraus hergestellte Marmeladen, Pürees und/oder Säfte.

18. Herstellungsverfahren gemäß Anspruch 16, **dadurch gekennzeichnet, dass** man zu einer Nahrungsmittelsuspension in einer löffelbaren Form zufügt, durch starkes Mischen, ein oder mehrere Aromen, Zucker, Salze, Gewürze, organische Säuren, Geschmacksverstärker, Farbstoffe, Hilfsstoffe, Zusätze, Konservierungsmittel, Säureregulatoren, lebende Mikroorganismen, Enzyme, Beeren, Früchte und/oder Gemüse und/oder daraus hergestellte Marmeladen, Pürees und/oder Säfte.

19. Herstellungsverfahren gemäß irgendeinem der Ansprüche 11 bis 18, **dadurch gekennzeichnet, dass** das Verfahren zudem umfasst einen Schritt, in welchem die Suspension mit Mikroorganismen gegärt wird.

20. Nahrungsmittelsuspension gemäß irgendeinem der Ansprüche 1 bis 10 zur Verwendung in der Verringerung von Cholesterin- und/oder GI-Werten und/oder zur Verbesserung der Magenfunktion.

21. Verwendung einer Nahrungsmittelsuspension aus irgendeinem der Ansprüche 1 bis 10 zur Verbesserung und/oder Modifizierung des Geschmacks, der Konsistenz und/oder des Nährwerts einer Soja- und/oder Diät-basierten Produktzusammensetzung, welche ein Joghurt ist.

## Revendications

1. Une suspension alimentaire stable à base de céréales, **caractérisée en ce que** la suspension alimentaire a été préparée
a) par traitement thermique d'un mélange composé d'une matière céréalière riche en bêta-glucane et d'eau de façon à gélatiniser l'amidon contenu dans la matière céréalière de façon à former une suspension,
b) par refroidissement de la suspension traitée thermiquement, et
c) par broyage de la suspension refroidie de façon à former une suspension alimentaire stable, et **en ce que** la concentration en bêta-glucane de la suspension alimentaire est au moins de 0,25 g/100 g de suspension alimentaire, où la suspension est refroidie à l'opération b) à une température de 0 à 50°C,
où la matière céréalière est sous la forme de son de céréales, farine de céréales, flocons de céréales, grains complets, concentré de fibres de céréales, ou sous la forme d'une combinaison de deux ou plus de ces composants, et le bêta-glucane est natif et sensiblement non dégradé.

2. La suspension alimentaire selon la revendication 1, **caractérisée en ce que** la concentration en bêta-glucane de la suspension alimentaire est au moins de 0,3 g/100 g de suspension alimentaire.

3. La suspension alimentaire selon l'une quelconque des revendications 1 à 2, **caractérisée en ce que** la matière céréalière contient de l'avoine, de l'orge, du blé, du seigle, du riz, du maïs, du millet ou toute combinaison de ces céréales.

4. La suspension alimentaire selon l'une quelconque des revendications 1 à 3, **caractérisée en ce que** la concentration en bêta-glucane de la matière céréalière est de 1 à 60% en poids.

5. La suspension alimentaire selon l'une quelconque des revendications 1 à 4, **caractérisée en ce que** la concentration en bêta-glucane de la suspension alimentaire est au moins de 0,5 g/100 g de suspension alimentaire.

6. La suspension alimentaire selon l'une quelconque des revendications 1 à 5, **caractérisée en ce que** le poids moléculaire du bêta-glucane est de 100 000 à 2 000 000 Da.

7. La suspension alimentaire selon la revendication 6, **caractérisée en ce que** le poids moléculaire du bêta-glucane est au moins de 400 000 Da.

8. La suspension alimentaire selon l'une quelconque des revendications 1 à 7, **caractérisée en ce que** la viscosité de la suspension alimentaire est de 100 à 2 000 000 cP à une température de 25°C.

9. La suspension alimentaire selon l'une quelconque des revendications 1 à 8, **caractérisée en ce que** la suspension alimentaire se présente sous une forme buvable, cuillérable ou tartinable.

10. La suspension alimentaire selon l'une quelconque des revendications 1 à 9, **caractérisée en ce que**, en outre, il a été ajouté à celle-ci au cours du broyage de la suspension et/ou après le broyage un ou plusieurs arômes, sucres, sels, épices, acides organiques, agents aromatisants, colorants, substances auxiliaires, additifs, conservateurs, régulateurs d'acidité, micro-organismes vivants, enzymes, baies, fruits et/ou légumes et/ou confitures, coulis et/ou jus fabriqués à partir de ceux-ci.

11. Un procédé de préparation d'une suspension alimentaire stable à base de céréales selon l'une quelconque des Revendications 1 à 10, **caractérisé en ce que** le procédé comprend les opérations suivantes :
a) le traitement thermique d'un mélange se composant d'une matière céréalière riche en bêta-glucane et d'eau de façon à gélatiniser l'amidon de la matière céréalière de façon à former une suspension,
b) le refroidissement de la suspension traitée thermiquement, et
c) le broyage de la suspension refroidie de façon à former une suspension alimentaire stable, où la suspension est refroidie à l'opération b) à une température de 0 à 50°C,
où la concentration en bêta-glucane de la suspension alimentaire est au moins de 0,25 g/100 g de suspension alimentaire, la matière céréalière est sous la forme de son de céréales, farine de céréales, flocons de céréales, grains complets, concentré de fibres de céréales, ou sous la forme d'une combinaison de deux ou plus de ces composants, et le bêta-glucane est natif et sensiblement non dégradé.

12. Le procédé selon la revendication 11, **caractérisé en ce que** le rapport massique de la matière céréalière et de l'eau à l'opération a) est de 2:1 à 1:100.

13. Le procédé selon l'une quelconque des revendications 11 à 12, **caractérisé en ce que** à l'opération a) le traitement thermique s'effectue à une température de 75 à 140°C pendant 0,5 à 60 minutes.

14. Le procédé selon l'une quelconque des revendications 11 à 13, **caractérisé en ce que** le mélange de matière céréalière et d'eau est agité pendant le traitement thermique de façon à former une suspension uniforme.

15. Le procédé selon l'une quelconque des revendications 11 à 14, **caractérisé en ce que** la suspension traitée thermiquement est refroidie à l'opération b) à une température de 0 à 25°C.

16. Le procédé selon l'une quelconque des revendications 11 à 15, **caractérisé en ce que**, en outre, au cours de la préparation de la suspension alimentaire, au cours du broyage de la suspension et/ou après le broyage, il est ajouté à celle-ci un ou plusieurs arômes, sucres, sels, épices, acides organiques, agents aromatisants, colorants, substances auxiliaires, additifs, conservateurs, régulateurs d'acidité, micro-organismes vivants, enzymes, baies, fruits et/ou légumes et/ou confitures, coulis et/ou jus fabriqués à partir de ceux-ci.

17. Le procédé selon la revendication 16, **caractérisée en ce qu'**il est ajouté à une suspension alimentaire sous forme buvable, en mélangeant à vitesse réduite, un ou plusieurs arômes, sucres, sels, épices, acides organiques, agents aromatisants, colorants, substances auxiliaires, additifs, conservateurs, régulateurs d'acidité, micro-organismes vivants, enzymes, baies, fruits et/ou légumes et/ou confitures, coulis et/ou jus fabriqués à partir de ceux-ci.

18. Le procédé selon la revendication 16, **caractérisée en ce qu'**il est ajouté à une suspension alimentaire sous forme cuillérable, en mélangeant fortement, un ou plusieurs arômes, sucres, sels, épices, acides organiques, agents aromatisants, colorants, substances auxiliaires, additifs, conservateurs, régulateurs d'acidité, micro-organismes vivants, enzymes, baies, fruits et/ou légumes et/ou confitures, coulis et/ou jus fabriqués à partir de ceux-ci.

19. Le procédé selon l'une quelconque des revendications 11 à 18, **caractérisé en ce que** le procédé comprend en outre une opération au cours de laquelle la suspension est fermentée avec des micro-organismes.

20. La suspension alimentaire selon l'une quelconque des revendications 1 à 10 destinée à une utilisation dans l'abaissement des niveaux de cholestérol et/ou d'index glycémique et/ou une amélioration de la fonction stomacale.

21. L'utilisation d'une suspension alimentaire selon l'une quelconque des revendications 1 à 10 destinée à améliorer et/ou modifier l'arôme, la texture et/ou la valeur nutritionnelle d'une composition à base de soja et/ou produits alimentaires, qui est un yoghourt.
